# EUROPEAN PATENT APPLICATION

(11) **EP 1 469 642 A2**
(43) Date of publication of application: **20.10.2004**
(21) Application number: 04396015.2
(22) Date of filing: 03.03.2004
(51) Int. Cl.: H04L 12/56, H04Q 7/38

(54) **Method, network nodes and system for sending data in a mobile communication network**

(30) Priority: 14.04.2003 US 462309 P
(71) Applicant: Nokia Corporation, 02150 Espoo (FI)
(72) Inventor: Kolding, Troels, 9270 Klarup (DK); Wigard, Jeroen, 9220 Aalborg (DK)
(74) Representative: Simmelvuo, Markku

(57) **Abstract**

The present invention describes a method, a first and second network nodes and system for sending data to a new network node in a mobile communications network. In terms of a WCDMA network, when a handover is triggered, data blocks have to be sent to a new Node B from the RNC instead of the old Node B.

Therefore, the present invention describes a solution for estimating which data blocks are sent to the new Node B. In the method, a timer is set for each one or more data blocks to be sent to a mobile terminal. When a handover is triggered, the RNC estimates based on the timer values which data blocks have already been transmitted via the present Node B to the mobile terminal. Only data blocks, which are estimated as not being sent to the mobile terminal, are transmitted from the RNC to the new Node B.

## Description

### FIELD OF THE INVENTION

The present invention relates to mobile telecommunication systems. In particular, the present invention relates to a novel and improved method, network nodes and system for sending data to a new network node in a mobile communications network when a handover is triggered.

### BACKGROUND OF THE INVENTION

In wireless data communications base stations are used to transmit data to mobile terminals. Mobile terminals can be in connection with one or more base stations at a time. In other words, cells of base stations may overlap, i.e. in some point a mobile terminal may be within two or more cells of different base stations. Every base station is able to serve mobile stations within a certain range. If a mobile terminal drifts out of the range of a base station, service is not available any more. Therefore, a handover to a new base station is needed. Normally, mobile telecommunication networks consist of several cells constituting a larger service area.

Most mobile telecommunication systems comprise a feature called `handover'. A handover procedure means that an already establish connection (e.g. a call, real-time data connection, non real-time data connection etc.) to a mobile terminal is maintained while moving from cell to cell within a mobile telecommunication network. Examples of mobile communication networks include Wideband Code Division Multiple Access (WCDMA), Global System for Mobile communications (GSM), Internet Protocol Radio Access Network (IP RAN), Wireless Local Area Network (WLAN), etc.

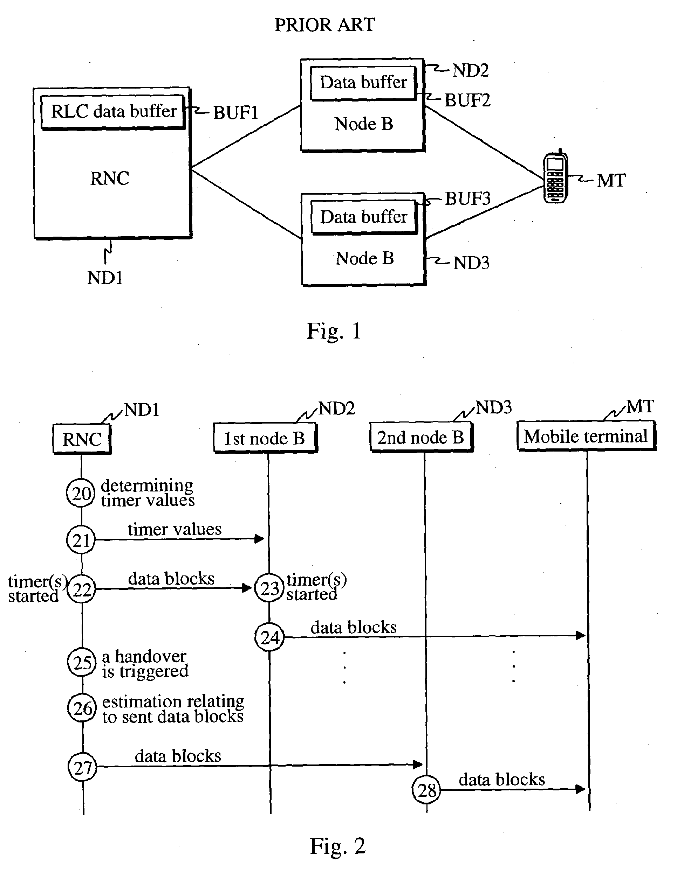

The handover procedure for data connections can be somewhat more problematic than for normal call connections. Figure 1 illustrates the situation for data connections in WCDMA network with High Speed Downlink Packet Access (HSDPA). The main problem is that the handover decision is taken at a different place as where some of the data is buffered. In a WCDMA network with High Speed Downlink Packet Access (HSDPA), packet scheduling is done in a Node B ND2 and ND3. A buffer with user data is located in Node B ND2 and ND3 on top of the Radio Link Control (RLC) buffer with user data in a Radio Network controller (RNC) ND1. The data flow between these two buffers is regulated by flow control. The handover decision is taken in RNC ND1. When a handover between cells belonging to a different Node B is triggered, RNC ND1 has to know the status of the buffer in Node B ND2 (from which the handover is executed). If the status information is not available, RNC ND1 will have to send the data amount that was sent to the Node B buffer (from which the handover is executed) again to the new Node B ND3. Another problem is that RNC ND1 has to know also the starting point of the data transmission to the new Node B ND3.

One solution to the aforementioned problems is that all data packets that have not been acknowledged (e.g. at the RLC level) are sent again to the new Node B. This solution, however, unnecessarily consumes air capacity, and information is being sent twice to the mobile terminal. The aforementioned solution is applicable only for data transmissions in an acknowledged (ACK) mode. In case of unacknowledged data transmission (e.g. streaming), the aforementioned solution is not applicable since data is not acknowledged at all.

The aforementioned problems are present not only in WCDMA systems but also in GSM, WLAN or other wireless communication systems where a handover is possible. In general, the aforementioned problems remain as long as part of the data is located in a buffer located in a different place as where the handover decision is taken.

### SUMMARY OF THE INVENTION

According to one aspect of the present invention, there is provided a method of sending data to a new network node in a mobile communications network comprising at least a first network node, a second network node, a third network node and a mobile terminal. The mobile communication network may be e.g. a WCDMA, an UMTS, an IP RAN, a GSM or a WLAN network. Furthermore, the first node may be e.g. a Radio Network Controller (RNC) of a WCDMA network, Mobile Switching Center (MSC) of a GSM network, Radio Access Node (RAN) of an IP RAN etc. Correspondingly, the second and third network nodes may be e.g. Node B elements of a WCDMA network or base stations of a GSM network. However, it is evident to a man skilled in the art that the mobile communication network and network nodes may be other than described above as long as part of the data to be sent to a mobile terminal is located in a buffer located in a different place as where the handover decision is taken.

When a handover is triggered in the mobile communication network, all data communication is transferred from the second network node to the third network node. Therefore, some solution has to be provided for deciding which data blocks are sent to the new network node (third network node).

In the solution described in the present invention, a timer value is determined for each one or more data blocks that are to be sent to the mobile terminal via the second network node. The timers of the data blocks sent to the mobile terminal are started e.g. when the data blocks arrive in a data block buffer in the second network node. The purpose of the timer of a data block to the second network node is that it is supposed to have the data block transmitted over the air interface to the mobile terminal before the timer expires. When a handover is triggered from a cell belonging to the second network node to a cell belonging to the third network node, the first network node estimates based on the timers, which data blocks have already been transmitted via the second network node to the mobile terminal, and transmits to the third network node only data blocks which are estimated as not being sent to the mobile terminal.

In one embodiment of the present invention, only data blocks whose timers have not expired are transmitted from the first network node to the third network node.

In one embodiment of the present invention, the method further comprises the steps of determining the timer values of the data blocks in the first network node, transmitting the set timer values of data blocks to the second network node, starting the timers of the data blocks in the first network node after the data blocks have been sent to the second network node, and starting the timers of the data blocks in the second network node when the data blocks arrive at a data block buffer.

In one embodiment of the present invention, the method further comprises the steps of determining the timer values of the data blocks in the second network node, starting the timers of the data blocks in the second network node when the data blocks arrive at a data block buffer, transmitting the set timer values to the first network node, and starting the timers of the data blocks in the first network node.

In one embodiment of the present invention, the method further comprises the steps of determining the timer values of the data blocks in an external node, transmitting the set timer values of data blocks to the first network node, transmitting the set timer values of data blocks to the second network node, starting the timers of the data blocks in the first network node after the data blocks have been sent to the second network node, and starting the timers of the data blocks in the second network node when the data blocks arrive at a data block buffer.

In one embodiment of the present invention, the determining of the timer values depends on at least one of the following facts: one or more quality of service attributes, measurements on the scheduling time of data blocks in the second network node, a default timer value or a safety margin.

According to a second aspect of the present invention, there is provided a first network node for sending data blocks to a second and third network node in a mobile telecommunications network, wherein the first network node is interfaced with at least the second network node and the third network node. The first network node comprises a data buffer for storing data blocks to be sent to the second and third network nodes, sending means for sending data blocks to the second and third network nodes, starting means for starting a timer for each data block or data blocks sent to the second network node, triggering means for triggering a handover from a cell belonging to the second network node to a cell belonging to the third network node, estimating means for estimating based on the timers which data blocks have already been transmitted via the second network node to the mobile terminal and transmitting means for transmitting from the data buffer to the third network node only data blocks which are estimated as not being sent to the mobile terminal.

In one embodiment of the present invention, transmitting means for transmitting are configured to transmit only data blocks whose timers have not expired to the third network node.

In one embodiment of the present invention, the first network node comprises determining means for determining timer values for data blocks and sending means for sending the determined timer values to the second network node.

In one embodiment of the present invention, the first network node comprises receiving means for receiving set timer values of the data blocks. In one embodiment of the present invention, the first network node comprises sending means for sending the received timer values of the data blocks to the second network node.

In one embodiment of the present invention, the timer values depend on at least one of the following: one or more quality of service attributes, measurements on the scheduling time of data blocks in the second network node, a default timer value or a safety margin.

In one embodiment of the present invention, the first network node is one of a radio network controller, a mobile switching center or a radio access network node.

According to a third aspect of the present invention, there is provided a second network node for sending data blocks to a mobile terminal in a mobile telecommunications network, wherein the second network node is interfaced with at least a first network node and the mobile terminal. The second network node comprises receiving means for receiving data blocks from the first network node, a data buffer for storing the data blocks received from the first network node, starting means for starting a timer for each data block or data blocks to be sent to the mobile terminal when the data blocks arrive at the data block buffer and sending means for sending a data block to the mobile terminal preferably before the timer of the data block expires.

In one embodiment of the present invention, the second network node comprises determining means for determining timer values for the data blocks and sending means for sending the determined timer values to the first network node.

In one embodiment of the present invention, the second network node comprises receiving means for receiving set timer values of the data blocks.

In one embodiment of the present invention, the timer values depend on at least one of the following facts: one or more quality of service attributes, measurements on the scheduling time of data blocks in the second network node, a default timer value or a safety margin.

In one embodiment of the present invention, the second network node comprises storing means for storing scheduling times of data blocks sent to the mobile terminal.

In one embodiment of the present invention, the second network node is a base station.

Furthermore, according to a fourth aspect of the present invention, there is provided a system for sending data to a new network node in a mobile communications network comprising at least a first network node, a second network node connected to the first network node, a third network node connected to the first network node, a mobile terminal communicating with the second and/or third network node.

The system further comprises determining means for determining timer values for the data blocks, starting means for starting the timer of a data block or data blocks to be sent to the mobile terminal, triggering means for triggering a handover from a cell belonging to the second network node to a cell belonging to the third network node, estimating means for estimating in the first network node based on the timers which data blocks have already been transmitted via the second network node to the mobile terminal and transmitting means for transmitting from the first network node to the third network node only data blocks which are estimated as not being sent to the mobile terminal.

In one embodiment of the present invention, the transmitting means for transmitting are configured to transmit only data blocks whose timers have not expired from the first network node to the third network node.

In one embodiment of the present invention, determining means for determining the timer values of the data blocks are arranged in the first network node, the first network node further comprises sending means for sending the determined timer values to the second network node and the second network node comprises receiving means for receiving from the first network node set timer values of the data blocks to be sent to the mobile terminal.

In one embodiment of the present invention, determining means for determining the timer values of the data blocks are arranged in the second network node, the second network node further comprises sending means for sending the determined timer values to the first network node and the first network node comprises receiving means for receiving from the second network node set timer values of the data blocks to be sent to the mobile terminal.

In one embodiment of the present invention, determining means for determining the timer values of the data blocks are arranged in an external network node, the first network node comprises receiving means for receiving the determined timer values, and the second network node comprises receiving means for receiving the determined timer values.

In one embodiment of the present invention, the timer values depend on at least one of the following: one or more quality of service attributes, measurements on the scheduling time of data blocks in the second network node, a default timer value or a safety margin.

In one embodiment of the present invention, the first network node is one of a radio network controller, a mobile switching center or a radio access network node.

In one embodiment of the present invention, the second network node is a base station.

In one embodiment of the present invention, the mobile communication network is one of a WCDMA, UMTS, IP RAN, GSM or WLAN network.

The present invention has several advantages over the prior-art solutions. Less data is sent twice over the air interface, thus saving valuable air interface capacity. In other words, the present invention minimizes the amount of data, which is sent twice over e.g. the Iub and air interface, in case of hard handover between two cells belonging to two different Node Bs.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig 1** is a block diagram illustrating a prior art mobile telecommunication network system,
**Fig 2** is a signaling diagram illustrating one embodiment of the method in accordance with the present invention,
**Fig 3** is a signaling diagram illustrating another embodiment of the method in accordance with the present invention,
**Fig 4** is a signaling diagram illustrating another embodiment of the method in accordance with the present invention,
**Fig 5** illustrates the timer feature of data blocks in accordance with the present invention,
**Fig 6** is a block diagram illustrating one embodiment of the system in accordance with the present invention,
**Fig 7** is a block diagram illustrating another embodiment of the system in accordance with the present invention, and
**Fig 8** is a block diagram illustrating another embodiment of the system in accordance with the present invention.

### DETAILED DESCRIPTION OF THE INVENTION

Reference will now be made in detail to the embodiments of the present invention, examples of which are illustrated in the accompanying drawings.

The present invention relates especially, but not exclusively, to hard handover algorithms for non real-time data, wherein the handover decision is taken at a different place as where some of the data is buffered. Figure 2 describes one embodiment of the method in accordance with the present invention. The example in Figure 2 comprises a first network node ND1, a second network node ND2, a third network node ND3 and a mobile terminal MT. The first network node ND1 may be e.g. a radio network controller (RNC) of a WCDMA network. The second and third network nodes ND2 and ND3 may be e.g. Node Bs of a WCDMA network.

When a handover is triggered to a cell belonging to a different Node B, RNC ND1 needs to know the start point of the data transmission to the new Node B ND3. The simplest solution would be to send data blocks, which have not been acknowledged e.g. at the RLC layer in RNC ND1 to the new Node B ND3. However, since the RLC round trip time can be quite large (> 150 ms plus scheduling delay in the Node B, which can be significant) the amount of data already received at mobile terminal MT (but not yet acknowledged) and the data being transmitted currently via the old Node B ND2 can be considerable. This is especially true with the new schemes that provide large user data rates and thus require larger buffers in Node B ND2 and ND3. If data blocks are not acknowledged e.g. at the RLC level at all, it is practically impossible to know, which data blocks have been transmitted over the air interface to mobile terminal MT.

Therefore, the present invention introduces a timer on every data block (MAC-PDU), which is available in Node B ND2 and RNC ND1. In figure 2, data blocks are sent to mobile terminal MT from RNC ND1 via Node B ND2. At step 20, RNC ND1 determines a timer value for each data block that is to be sent to mobile terminal MT via Node B ND2. At step 21, the timer values of data blocks are sent to Node B ND2. The method of how the timer values are transmitted to Node B ND2 is not discussed here in more detail. It is evident to a man skilled in the art that various different solutions can be used achieve the timer value transmission.

At step 22, data blocks are sent from RNC ND1 to Node B ND2. At the same time RNC ND1 starts the timers of those data blocks sent to Node B ND2. When the data blocks arrive at the data block buffer in Node B ND2, a timer is started for each received data block (step 23). Node B ND2 is supposed to have a data block transmitted over the air interface to mobile terminal MT before the timer of the data block expires (step 24).

When a handover decision is taken in RNC ND1 (step 25), data blocks have to be sent to the new Node B ND3. However, RNC ND1 has to somehow decide which data blocks to send to Node B ND3. As described in the present invention, RNC ND1 knows the timer values of every data block. Therefore, it can estimate which blocks have already been transmitted to mobile terminal MT and leave those blocks out of the transmission to the new Node B ND3 (steps 26 and 27). Obviously some blocks may still be sent twice, since Node B ND2 may schedule faster than the timer values indicate. Finally, Node B ND3 sends the data blocks to mobile terminal MT (step 28).

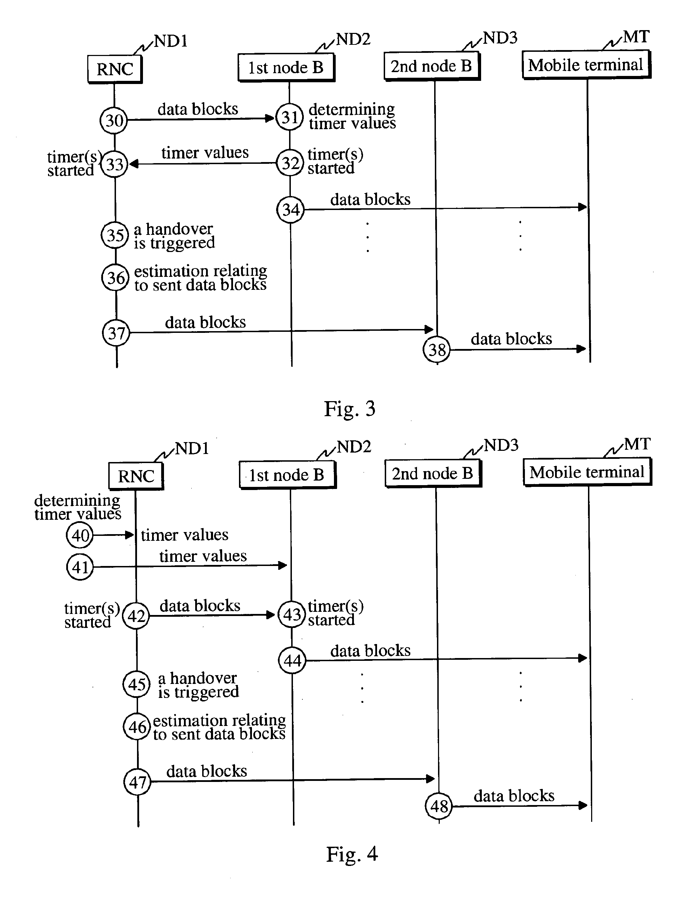

The embodiment described in Figure 3 is similar to the one described in Figure 2. RNC ND1 sends data blocks to be sent to mobile terminal MT to Node B ND2 (step 30). In the embodiment of Figure 3, Node B ND2 determines the timer values for the data blocks (step 31). When the data blocks arrive at a data block buffer in Node B ND2, a timer is started for each received data block (step 32). Furthermore, the set timer values are sent to RNC ND1 (step 33) and the timers are started in RNC ND1. The following steps (34-38) are the same as already described with Figure 2 (steps 24-28).

The embodiment described in Figure 4 is similar to the ones described in Figures 2 and 3. In the embodiment illustrated in Figure 4, the determination of the timer values is made in an external node, e.g. in a core network or in any other node other than RNC ND1 and Node B ND2. The determined timer values are then sent to RNC ND1 and Node B ND2 (steps 40 and 41). In an alternative embodiment, the external node sends the determined timer values only to RNC ND1, which then forwards them further to Node B ND2. The following steps (42-48) are the same as already described with Figure 2 (steps 22-28).

Referring back to Figures 2, 3 and 4, the determination of timer values set for data blocks may be made based on various aspects. A timer may, for example, be set based on the following facts:
- a default timer value,
- measurements on the scheduling time in the Node-B ND2. For example, in case the scheduling time for a MAC-PDU in the past 500 ms was 50 ms, the timer can be set to 50ms,
- a safety margin to allow for some delay jitter,
- QoS parameters, e.g. allocation retention priority, traffic handling priority, traffic class, etc. This means that the Node B ND2 has to keep these QoS constraints, so they need to be set in a reasonable way.

It must be noted that the timer value of a data block may be set based on one or more of the aforementioned criteria or some other appropriate criterion or criteria.

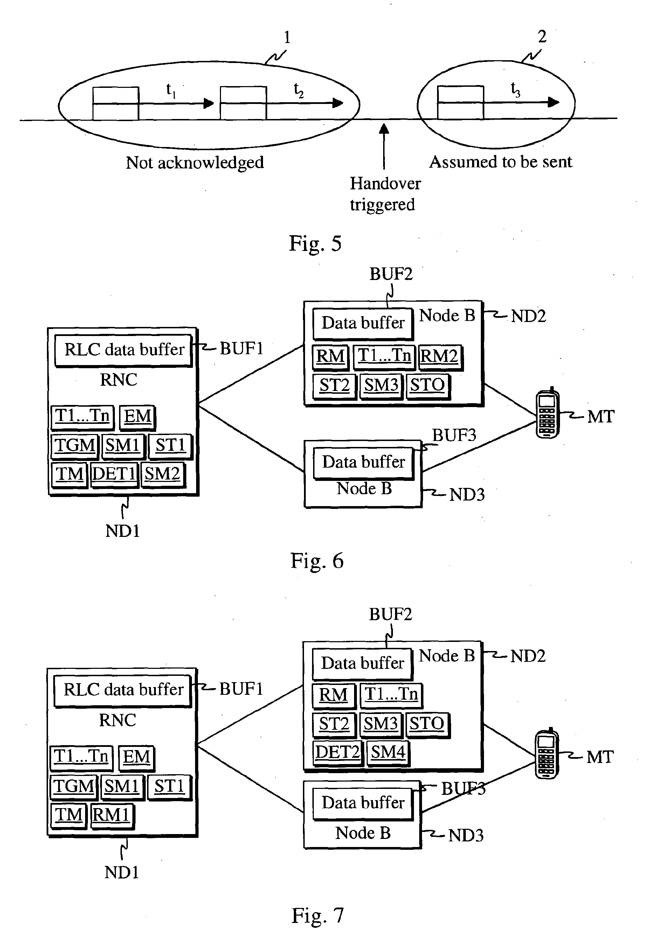

Figure 5 clarifies the idea of estimating in an RNC ND1, which data blocks have already been sent from a Node B ND2 to a mobile terminal MT when a handover is triggered. At the handover trigger moment all the blocks, whose timers have expired before the handover trigger, can be disregarded. Disregarded here means that they do not have to be sent/transferred to the new Node B ND3. In Figure 5, timers t₁ and t₂ of data blocks 1 have expired before the handover trigger occurs. Therefore, only data block 2 whose timer has not expired has to be retransmitted to the new Node B ND3.

Figure 6 represents one embodiment of the system in accordance with present invention. The system illustrated in Figure 6 comprises a first network node ND1, a second network node ND2, a third network node ND3 and a mobile terminal MT. All the aforementioned elements belong to a mobile communication network, which may be e.g. a WCDMA, UMTS, IP RAN, GSM or WLAN network. The following description of the present invention will be described with by using the WCDMA system with the High Speed Downlink Packet Access (HSDPA) feature.

Figure 6 comprises only elements of the mobile communication network that are relevant in view of the present invention. The Radio Network Controller (RNC) ND1 is connected to two base stations (Node B) ND2 and ND3. Both Node Bs ND2 and ND3 are able to communicate with the mobile terminal MT at least when a handover is triggered. Moreover, Figure 6 shows the location of different data buffers BUF1, BUF2, BUF3 in the case of the UTRAN with the HSDPA.

In the embodiment of Figure 6, timer values of data blocks are determined in RNC ND1.

For achieving the aforementioned functionality of the present invention, RNC ND1 comprises one or more timers T1...Tn set for each one or more data blocks to be sent to mobile terminal MT, sending means SM1 for sending data blocks to Node B ND2 and Node B ND3, starting means ST1 for starting a timer for each data block or data blocks sent to Node B ND2, triggering means TGM for triggering a handover from a cell belonging to Node B ND2 to a cell belonging to Node B ND3, estimating means EM for estimating in RNC ND1 based on the timer values which data blocks have already been transmitted via Node B ND2 to mobile terminal MT and transmitting means TM for transmitting to Node B ND3 only data blocks which are estimated as not being sent to mobile terminal MT via Node B ND2.

If RNC ND1 determines the timer values, it may further comprise determining means DET1 for determining timer values for data blocks and sending means SM2 for sending the determined timer values to Node B ND2.

Node B ND2 comprises receiving means RM for receiving data blocks from RNC ND1, receiving means RM2 for receiving set timer values T1...Tn of the data blocks, starting means ST2 for starting the timer of a data block when the data block arrives in a data block buffer BUF2 and sending means SM3 for sending the data block to mobile terminal MT via the air interface before the timer of the data block expires. Furthermore, Node B ND2 may comprise storing means STO for storing scheduling times of data blocks sent to mobile terminal MT. The stored scheduling times information may be used e.g. in determining the timer values for data blocks.

Figure 7 represents one embodiment of the system in accordance with present invention. The system illustrated in Figure 7 comprises a first network node ND1, a second network node ND2, a third network node ND3 and a mobile terminal MT. All the aforementioned elements belong to a mobile communication network, which may be e.g. a WCDMA, UMTS, IP RAN, GSM or WLAN network. The following description of the present invention will be described with by using the WCDMA system with the High Speed Downlink Packet Access (HSDPA) feature.

Figure 7 comprises only elements of the mobile communication network that are relevant in view of the present invention. The Radio Network Controller (RNC) ND1 is connected to two base stations (Node B) ND2 and ND3. Both Node Bs ND2 and ND3 are able to communicate with the mobile terminal MT at least when a handover is triggered. Moreover, Figure 7 shows the location of different data buffers BUF1, BUF2, BUF3 in the case of the UTRAN with the HSDPA.

In the embodiment of Figure 7, timer values of data blocks are determined in Node B ND2.

For achieving the aforementioned functionality of the present invention, RNC ND1 comprises one or more timers T1...Tn set for each one or more data blocks to be sent to mobile terminal MT, sending means SM1 for sending data blocks to Node B ND2 and Node B ND3, starting means ST1 for starting a timer for each data block or data blocks sent to Node B ND2, triggering means TGM for triggering a handover from a cell belonging to Node B ND2 to a cell belonging to Node B ND3, estimating means EM for estimating in RNC ND1 based on the timer values which data blocks have already been transmitted via Node B ND2 to mobile terminal MT and transmitting means TM for transmitting to Node B ND3 only data blocks which are estimated as not being sent to mobile terminal MT via Node B ND2.

Furthermore, RNC ND1 comprises receiving means RM1 for receiving set timer values of the data blocks. The set timer values are received e.g. from Node B ND2.

Node B ND2 comprises receiving means RM for receiving data blocks from RNC ND1, starting means ST2 for starting the timer of a data block when the data block arrives in a data block buffer BUF2 and sending means SM3 for sending the data block to mobile terminal MT via the air interface before the timer of the data block expires. Furthermore, Node B ND2 may comprise storing means STO for storing scheduling times of data blocks sent to mobile terminal MT. The stored scheduling times information may be e.g. used in determining the timer values for data blocks.

Furthermore, Node B ND2 may comprise determining means DET2 for determining timer values T1...Tn for data blocks and sending means SM4 for sending the determined timer values to RNC ND1.

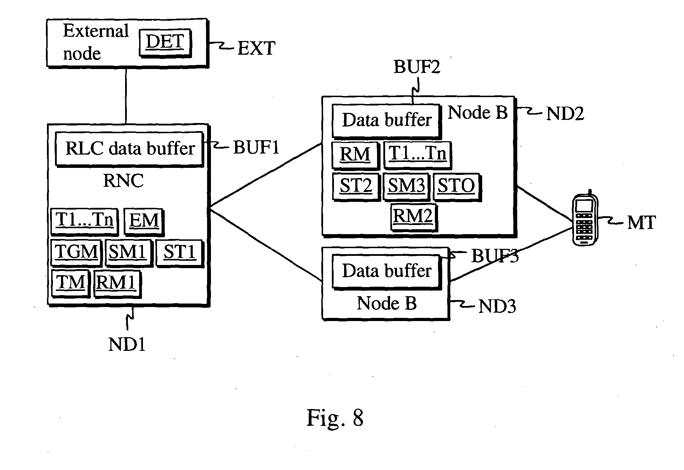

Figure 8 represents one embodiment of the system in accordance with present invention. The system illustrated in Figure 8 comprises a first network node ND1, a second network node ND2, a third network node ND3, an external network node EXT and a mobile terminal MT. All the aforementioned elements belong to a mobile communication network, which may be e.g. a WCDMA, UMTS, IP RAN, GSM or WLAN network. The following description of the present invention will be described with by using the WCDMA system with the High Speed Downlink Packet Access (HSDPA) feature.

Figure 8 comprises only elements of the mobile communication network that are relevant in view of the present invention. The Radio Network Controller (RNC) ND1 is connected to two base stations (Node B) ND2 and ND3. Both Node Bs ND2 and ND3 are able to communicate with the mobile terminal MT at least when a handover is triggered. Furthermore, an external network node EXT of the mobile communication network is connected at least to RNC ND1. Moreover, Figure 8 shows the location of different data buffers BUF1, BUF2, BUF3 in the case of the UTRAN with the HSDPA.

In the embodiment of Figure 8, timer values of data blocks are determined in external network node EXT.

For achieving the aforementioned functionality of the present invention, RNC ND1 comprises receiving means RM1 for receiving set timer values T1...Tn of data blocks to be sent to mobile terminal MT, sending means SM1 for sending data blocks to Node B ND2 and Node B ND3, starting means ST1 for starting a timer for each data block or data blocks sent to Node B ND2, triggering means TGM for triggering a handover from a cell belonging to Node B ND2 to a cell belonging to Node B ND3, estimating means EM for estimating in RNC ND1 based on the timer values which data blocks have already been transmitted via Node B ND2 to mobile terminal MT and transmitting means TM for transmitting to Node B ND3 only data blocks which are estimated as not being sent to mobile terminal MT via Node B ND2.

The external node EXT comprises determining means DET for determining the timer values of the data blocks. Therefore, RNC ND1 receives the set timer values T1...Tn from the external node EXT. The external node EXT may be e.g. a core network node of the mobile communication network or any other appropriate node that may set timer values for data blocks.

Node B ND2 comprises receiving means RM for receiving data blocks from RNC ND1, receiving means RM2 for receiving set timer values T1...Tn of the data blocks, starting means ST2 for starting the timer of a data block when the data block arrives in a data block buffer BUF2 and sending means SM3 for sending the data block to mobile terminal MT via the air interface before the timer of the data block expires. Furthermore, Node B ND2 may comprise storing means STO for storing scheduling times of data blocks sent to mobile terminal MT. The stored scheduling times information may be e.g. used in determining the timer values for data blocks.

The set timer values T1...Tn are received e.g. from RNC ND1 or directly from the external node EXT of the mobile communication network.

The aforementioned means are implemented with known software and/or hardware means and are not therefore described here in more detail.

As a summary, the solution described in the present invention is not system specific, and therefore may be applied to systems like the WCDMA, GSM, WLAN, etc, as long as a part of the data is located in a buffer, which is located in a different place as where the handover decision is being taken.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A method of sending data to a new network node in a mobile communications network comprising a first network node, a second network node, a third network node and a mobile terminal, wherein data blocks are sent from said first network node to said second network node, the method comprising the steps of:
determining a timer value for each data block or data blocks;
starting said timer of a data block or data blocks sent to said mobile terminal;
triggering a handover from a cell belonging to said second network node to a cell belonging to said third network node;
estimating in said first network node based on said timers which data blocks have already been transmitted via said second network node to said mobile terminal; and
transmitting from said first network node to said third network node only data blocks which are estimated as not being sent to said mobile terminal.

2. The method according to claim 1, wherein the method comprises the step of:
transmitting only data blocks whose timers have not expired from said first network node to said third network node.

3. The method according to claim 1, wherein the method comprises the steps of:
determining said timer values of said data blocks in said first network node;
transmitting said set timer values of data blocks to said second network node;
starting said timers of said data blocks in said first network node after said data blocks have been sent to said second network node; and
starting said timers of said data blocks in said second network node when said data blocks arrive at a data block buffer.

4. The method according to claim 3, wherein said determining of said timer values depends on at least one of the following:
one or more quality of service attributes;
measurements on the scheduling time of data blocks in said second network node;
a default timer value; or
a safety margin.

5. The method according to claim 1, wherein the method comprises the steps of:
determining said timer values of said data blocks in said second network node;
starting said timers of said data blocks in said second network node when said data blocks arrive at a data block buffer;
transmitting said set timer values to said first network node; and
starting said timers of said data blocks in said first network node.

6. The method according to claim 5, wherein said determining of said timer values depends on at least one of the following:
one or more quality of service attributes;
measurements on the scheduling time of data blocks in said second network node;
a default timer value; or
a safety margin.

7. The method according to claim 1, wherein the method comprises the steps of:
determining said timer values of said data blocks in an external node;
transmitting said set timer values of data blocks to said first network node;
transmitting said set timer values of data blocks to said second network node;
starting said timers of said data blocks in said first network node after said data blocks have been sent to said second network node; and
starting said timers of said data blocks in said second network node when said data blocks arrive at a data block buffer.

8. The method according to claim 7, wherein said determining of said timer values depend on at least one of the following:
one or more quality of service attributes;
measurements on the scheduling time of data blocks in said second network node;
a default timer value; or
a safety margin.

9. The method according to claim 1, wherein the mobile communication network is one of an WCDMA, UMTS, IP RAN, GSM or WLAN network.

10. A first network node for sending data blocks to a second and third network node in a mobile telecommunications network, wherein said first network node is interfaced with at least said second and third network nodes, wherein said first network node further comprises:
a data buffer for storing data blocks to be sent to said second and/or third network node;
sending means for sending data blocks to said second and/or third network node;
starting means for starting a timer for each data block or data blocks sent to said second network node;
triggering means for triggering a handover from a cell belonging to said second network node to a cell belonging to said third network node;
estimating means for estimating based on said timers which data blocks have already been transmitted via said second network node to said mobile terminal; and
transmitting means for transmitting from said data buffer to said third network node only data blocks which are estimated as not being sent to said mobile terminal.

11. The first network node according to claim 10, wherein said transmitting means are configured to transmit only data blocks whose timers have not expired to said third network node.

12. The first network node according to claim 10, wherein said first network node further comprises:
determining means for determining timer values for data blocks; and
sending means for sending said determined timer values of said data blocks to said second network node.

13. The first network node according to claim 12, wherein said timer values of said data blocks depend on at least one of the following:
one or more quality of service attributes;
measurements on the scheduling time of data blocks in said second network node;
a default timer value; or
a safety margin.

14. The first network node according to claim 10, wherein said first network node comprises receiving means for receiving set timer values of said data blocks.

15. The first network node according to claim 14, wherein said first network node comprises sending means for sending said received timer values of said data blocks to said second network node.

16. The first network node according to claim 14, wherein said timer values of said data blocks depend on at least one of the following:
one or more quality of service attributes;
measurements on the scheduling time of data blocks in said second network node;
a default timer value; or
a safety margin.

17. The first network node according to claim 10, wherein said first network node is one of a radio network controller, a mobile switching center or a radio access network node.

18. A second network node for sending data blocks to a mobile terminal in a mobile telecommunications network, wherein said second network node is interfaced with at least a first network node and said mobile terminal, wherein said second network node further comprises:
receiving means for receiving data blocks from said first network node;
a data buffer for storing data blocks received from said first network node;
starting means for starting a timer for each data block or data blocks to be sent to said mobile terminal when said data blocks arrive at said data block buffer; and
sending means for sending a data block to said mobile terminal before the timer of said data block expires.

19. The second network node according to claim 18, wherein said second network node further comprises:
determining means for determining timer values for said data blocks; and
sending means for sending said determined timer values of said data blocks to said first network node.

20. The second network node according to claim 19, wherein said timer values depend on at least one of the following:
one or more quality of service attributes;
measurements on the scheduling time of data blocks in said second network node;
a default timer value; or
a safety margin.

21. The second network node according to claim 18, wherein said second network node comprises receiving means for receiving set timer values of said data blocks.

22. The second network node according to claim 21, wherein said timer values depend on at least one of the following:
one or more quality of service attributes;
measurements on the scheduling time of data blocks in said second network node;
a default timer value; or
a safety margin.

23. The second network node according to claim 18, wherein said second network node comprises storing means for storing scheduling times of data blocks sent to said mobile terminal.

24. The second network node according to claim 18, wherein said second network node is a base station.

25. A system for sending data to a new network node in a mobile communications network comprising at least:
a first network node;
a second network node connected to said first network node;
a third network node connected to said first network node;
a mobile terminal communicating with said second and/or third network node;
wherein the system further comprises:
a plurality of data buffers for storing data blocks;
determining means for determining timer values for said data blocks;
starting means for starting said timers of said data blocks to be sent to said mobile terminal;
triggering means for triggering a handover from a cell belonging to said second network node to a cell belonging to said third network node;
estimating means for estimating in said first network node based on said timers which data blocks have already been transmitted via said second network node to said mobile terminal; and
transmitting means for transmitting from said first network node to said third network node only data blocks which are estimated as not being sent to said mobile terminal.

26. The system according to claim 25, wherein said transmitting means for transmitting are configured to transmit only data blocks whose timers have not expired from said first network node to said third network node.

27. The system according to claim 25, wherein:
said determining means for determining said timer values of said data blocks are arranged in said first network node;
said first network node comprises sending means for sending said determined timer values to said second network node; and
said second network node comprises receiving means for receiving from said first network node set timer values of said data blocks to be sent to said mobile terminal.

28. The system according to claim 27, wherein said timer values depend on at least one of the following:
one or more quality of service attributes;
measurements on the scheduling time of data blocks in said second network node;
a default timer value; or
a safety margin.

29. The system according to claim 25, wherein:
said determining means for determining said timer values of said data blocks are arranged in said second network node;
said second network node comprises sending means for sending said determined timer values to said first network node; and
said first network node comprises receiving means for receiving from said second network node set timer values of said data blocks to be sent to said mobile.

30. The system according to claim 29, wherein said timer values depend on at least one of the following:
one or more quality of service attributes;
measurements on the scheduling time of data blocks in said second network node;
a default timer value; or
a safety margin.

31. The system according to claim 25, wherein:
said determining means for determining said timer values of said data blocks are arranged in an external network node;
said first network node comprises receiving means for receiving said determined timer values; and
said second network node comprises receiving means for receiving said determined timer values.

32. The system according to claim 31, wherein said timer values depend on at least one of the following:
one or more quality of service attributes;
measurements on the scheduling time of data blocks in said second network node;
a default timer value; or
a safety margin.

33. The system according to claim 25, wherein said first network node is one of a radio network controller, mobile switching center or radio access network node.

34. The system according to claim 25, wherein said second network node is a base station.

35. The system according to claim 25, wherein said mobile communication network is one of a WCDMA, UMTS, IP RAN, GSM or WLAN network.
